# EUROPEAN PATENT APPLICATION

(11) **EP 0 598 156 A1**
(43) Date of publication of application: **25.05.1994**
(21) Application number: 92403116.4
(22) Date of filing: 19.11.1992
(51) Int. Cl.: A01N 63/00

(54) **Phagostimulant enhancement of insecticide**

(71) Applicant: INSTITUT ARMAND-FRAPPIER, Laval Quebec H7N 4Z3 (CA); MINISTERE DES FORETS DU QUEBEC, Ste.-Foy, Quebec G1P 3W8 (CA)
(72) Inventor: Guertin, Claude, Repentigny, Quebec J6A 1N8 (CA); Cabana, Jean, Boischatel, Quebec G0A 1HO (CA); Arella, Maximilien, Ste-Dorothée, Quebec H7X 3J6 (CA); Pare, Germain, Cap-Rouge, Quebec G1Y 2B2 (CA)
(74) Representative: Le Guen, Gérard

(57) **Abstract**

In accordance with the present invention, there is now provided an insecticidal composition comprising an effective amount of an insecticide in association with a phagostimulant. The phagostimulant is preferably selected from a carbohydrate and/or and amino acid. Preferred constituents include *Bacillus thuringiensis* as the insecticide, sucrose (β-D-fructofuranosyl-α-D-glucopyranoside) as the carbohydrate, and proline (2-pyrrolidinecarboxylic acid) as the amino acid. The present application also discloses a method of controlling or reducing populations of pest insects. This method comprises the application of an effective amount of a preparation comprising an insecticide associated with a phagostimulant.

## Description

### FIELD OF INVENTION

The present invention is concerned with a phagostimulant insecticidal preparation comprising a carbohydrate and/or an amino acid in association with an insecticide. The insecticide can be biological or chemical.

### BACKGROUND OF THE INVENTION

*Bacillus thuringiensis* Berliner is known to be an effective microbial insecticide since 1961, under the Federal Insecticide, Fungicide, and Rodenticide Act (U.SA.). The *B. thuringiensis* is a rod-shaped, gram positive bacterium capable of sporulation. During this process, a parasporal protein called crystal is produced, which is highly toxic towards insect pests. More specifically, *B. thuringiensis* is known to produce four different toxins, namely α-exotoxin, β-exotoxin, γ-exotoxin and δ-endotoxin. Title 40 of the Code of Federal Regulations Part 180,1011 (U.S.A.) requires that food-use preparations of *B. thuringiensis* be free of the β-exotoxin. The activity of the registered *B. thuringiensis* is primarily due to the δ-endotoxin, which is the major component of the characteristic crystal. Various preparations containing *B. thuringiensis* are available worldwide for the control of various lepidopterous, dipterous, coleopterous insects, and nematodes.

Research has shown that food selection is largely governed by the capacity of insects to detect chemical compounds (Fraenkel, *Science* 1959, 129, 1466-1470; Schoonhoven, *Entomol. Exp. & Appl*., 1969, 12, 555-564; and Dethier, *Sym. R.* *Entomol. Soc. Lond*., 1970, 3, 46-58). Nutrient compounds such as carbohydrates and amino acids are found to influence the feeding behavior of insects (Ladd, *J. Econ. Entomol*., 1986, 79, 668-671 and Aldler, *J. Econ. Entomol*., 1989, 81, 1344-1349).

Several investigations on the behavioral and physiological feeding mechanisms of young spruce budworm larvae have been carried out over the past years. The general conclusion from these studies is that carbohydrate extracts of host plants seem to be the most stimulating, followed by nitrogenous extracts. A strong feeding response of larvae is also associated with sucrose. It has been proposed that the feeding preference of insects to this carbohydrate is related with the "chemosensory" capacities of a larval sucrose-sensitive cell (Albert et al., *Physiol. Entomol*., 1985, 13, 243-247).

Considerable efforts have been made to increase the insecticidal properties of *B. thuringiensis* preparations. US 3,113,066 (Edmond) teaches the combination of *B. thuringiensis* with an insecticide oil. US 3,911,110 (Smirnoff) proposes the use of *B. thuringiensis* in association with an enzyme, more specifically the enzyme chitinase. US 3,937,813 (Clark) discloses the use of the N'-(4-chloro-*o*-tolyl)-N,N-dimethyl formamidine (Chlordimeform) with *B. thuringiensis*. US 3,944,664 (Kitagaki et al.) proposes the combination of β-exotoxin originating from *B. thuringiensis* with acaricides such as 1,1-bis-(p-chlorophenyl) ethanol (DMC), bis-(p-chlorophenyl) sulfide (DDDS), and bis-(p-chlorophenoxy) methane (Neotran). US 4,107,294 (Chauthani) describes the utilization of *B. thuringiensis* in combination with an insect growth regulator, namely 1-(4-chlorophenyl)-3-(2,6-difluorobenzoyl)-urea. US 4,826,678 (Gaudet) teaches the synergistic use of C₁₈ fatty acid salts with *B. thuringiensis*.

However, none of the above references address the possibility of taking advantage of insects' "chemosensory" capacities towards phagostimulants to increase the effectiveness of insecticides. It would be highly desirable to exploit these particular properties. Such new insecticidal preparations would enhance the effectiveness of the insecticide, thus allowing a reduction of the amount of insecticide required to control or reduce the population of pest insects.

### SUMMARY OF THE INVENTION

In accordance with the present invention, there is now provided an insecticidal preparation comprising an effective amount of an insecticide in association with a phagostimulant. The phagostimulant is preferably selected from a carbohydrate and/or an amino acid having phagostimulant properties. Preferred preparations include *Bacillus thuringiensis* as the insecticide, sucrose (β-D-fructofuranosyl-α-D-glucopyranoside) as the carbohydrate and/or proline (2-pyrrolidinecarboxylic acid) as the amino acid.

In one aspect of the invention, the insecticidal composition may contain as low as about 1 millimolar (m*M*) of phagostimulant therein.

In a further aspect of the present invention, there is also provided a method for controlling or reducing the population of pest insects. This method comprises the application of an effective amount of a preparation comprising an insecticide associated with a phagostimulant.

### DETAILED DESCRIPTION OF THE INVENTION

The present invention exploits the "chemosensory" capacities of insects when placed in the presence of a phagostimulant. When the latter is combined with an insecticide, the direct consequence is an increase in the amount of insecticide ingested, thus improving its efficiency. Preferred insecticides include pathogenic enteromicroorganisms such as bacteria, viruses, fungi and microsporidia, or any other microbial species pathogenic to insects. Chemical insecticides and compounds obtained synthetically or biochemically also fall within the scope of the present invention. Examples of these compounds include toxins, hormones, enzymes and the like.

The present invention demonstrates that the addition of a phagostimulant to an insecticide increases the insecticidal effectiveness of the latter. More specifically, the addition of a phagostimulant to an enteromicroorganism preparation results in an enhancement of the insecticidal potency. In the present application, the term "phagostimulant" can be defined as a substance which enhances the insect food intake by stimulating chemoreceptor cells, which we referred to previously as "chemosensory" capacities. For example, the efficiency of the biological insecticide *Bacillus thuringiensis* increases with the addition of a carbohydrate and/or an amino acid having phagostimulant capacities, which act as a feeding stimulant. Enhanced mortality of the larval form of the eastern spruce budworm, *Choristoneura fumiferana* (Clemens) and the cabbage looper, *Trichoplusia ni* (Hübner), was observed when these insects were eased to *B. thuringiensis* preparations containing a phagostimulant.

The ready-to-use preparation may be in the form of a wettable powder, flowable concentrate solution, water soluble granules, ultra low volume formulation, and the like, which may be applied to the insect habitat. A preferred method is to spray the preparation comprising a phagostimulant and an insecticide to a surface on which the insects are present or are expected to be present in the near future.

The enhanced insecticidal potency of the *B. thuringiensis* preparations by the addition of a phagostimulant is an important breakthrough for the utilization of insecticides. *B. thuringiensis* preparations alone have been reported to provoke a reduction of food intake when ingested by insects. The addition of a phagostimulant in *B. thuringiensis* preparations triggers a preferential insect's food selection, which provokes an increase of the amount of food intake and a significant reduction of the time required to ingest the lethal dose of *B. thuringiensis*. This unique finding provides a much more effective insecticidal preparation. By increasing the efficiency of the insecticidal properties with the addition of these phagostimulants, it is possible to greatly reduce the amount of *B. thuringiensis* needed to control or reduce the population of pest insects.

Other microorganisms can be suitable for the purposes of the present invention. The phagostimulants can be used with bacteria and/or viruses, for example nucleopolyvirus, cytoplasmic granulosis, non-included viruses and pox viruses of insects, or in conjunction with various species of entomopathogenic microsporidia, fungi and the like. In fact, the phagostimulants can be used with any biological and/or chemical insecticide.

Another important advantage of the insecticidal preparation of the present invention is that the concentration of phagostimulant needed to enhance the insecticidal effectiveness is very small. Experiments have shown that the concentration of phagostimulant can be as low as about 1 m*M* in the preparation, depending on the insect species and on the nature of the phagostimulant. Experiments to control or reduce the population of spruce budworm have shown that the preferred range of concentration for sucrose and proline is from about 2.5 to 25 m*M*, but satisfactory results were also obtained with lower concentrations.

Preferred embodiments of the present invention include the use of sucrose and/or proline as the phagostimulant agents. Sucrose is a monoclinic spheroidal crystal powder obtained from sugar cane, *Saccharum officinarum* L. and sugar beet, *Beta valgaris* L. This product is very soluble in water and is normally used as a sweetening agent in food preparation. Proline is a white crystalline powder, freely soluble in water, and is a naturally occurring amino acid. Since these products are well known and are readily and inexpensively available, the enormous potential of the present invention will be instantly appreciated by those skilled in the art.

Though sucrose and proline have been shown to be preferred for the purposes of the present invention, the use of phagostimulants according to the invention should not be limited to these products. Other compounds have been tested to evaluate their effect on the feeding response of spruce budworm larvae. The carbohydrates fructose, arabinose, sorbitol, maltose, glucose and lactose, and the amino acids glycine, alanine, ornithine, phenylalanine, isoleucine and valine have all demonstrated phagostimulant properties towards young eastern spruce budworm larvae, but to a lesser extent than sucrose and proline. However, it will be obvious to any person skilled in the art that some carbohydrates and/or amino acids are likely to act as a deterrent. This is not surprising since the sensory perception depends, to a large extent, on the evolution of the insect and its food sources. This evolution may trigger variations in the chemosensory capacities of each insect species. As an example, a product which is a phagostimulant for a given insect species, could be a deterrent for another species. Similarly, a product deterrent for a species could possess strong phagostimulant properties for another species. Such variations are easily appreciated by any person skilled in the art.

The following examples are provided to illustrate the present invention and should not be construed as limiting its scope.

### EXAMPLE 1

The effect of the addition of sucrose or proline to two commercial formulations of *Bacillus thuringiensis* on the feeding rate (amount of food ingested) was monitored on young larvae of the eastern spruce budworm, *Choristoneura fumiferana* (Clemens). This experiment was conducted to determine if the addition of a phagostimulant would increase the amount of insecticide ingested by the insect. The fourth-instar was used in all experiments and the larval stage was determined by measurement of the head capsule width. The insects were used for one experiment only, and those which moulted during a test were discarded.

### Sample Unit and Procedure

Cellulose nitrate disks of 6,5 mm diameter were punched from 0,45 µm pore size filter paper strips (Sartorius). Each experimental unit consisted of one disk placed in the middle of a 10 mm-diameter X 5 mm deep clear plexiglass unit. The disk was impregnated with a 15 µl aliquot of tested solutions. Forty insects were used per application and randomly assigned to a treatment with one of the following insecticidal preparations:
1. Foray 48B ^{tm}
2. Foray 48B ^{tm} + sucrose
3. Foray 48B ^{tm} + proline
4. Dipel 176 ^{tm}
5. Dipel 176 ^{tm} + sucrose
Foray 48B ^{tm} is a water-based preparation manufactured and sold by NOVO Nordisk (Danbury, CT), and Dipel 176 ^{tm} is an oil-based formulation produced by Abbott Laboratories, Inc. (North Chicago, MI). Each of them are standard commercial formulations of *B. thuringiensis* commonly used against the spruce budworm *inter alia*. Both were used at a sub-lethal concentration of 0,025 µg/ml, sucrose was used at a concentration of 8,56 mg/ml and proline at a concentration of 2,88 mg/ml. All solutions were freshly prepared before experiments.

A newly moulted fourth-instar larva was placed in the centre of the test arena and was allowed to feed for 48 h. The arenas were covered with microscope cover glass to prevent water loss, and were then placed at 25°C, photoperiod of 16:8 h (L:D) and 60% R.H. For each experiment, after 8, 16, 24 and 48 hours, disks were removed and replaced by newly impregnated disks. The feeding rate was estimated and it corresponded to the average total consumption of a particular preparation.

### Results

Table 1 gives the cumulative consumption of the fourth-instar larvae of spruce budworm exposed to the different treatments. The consumption of disks impregnated with the insecticide *B. thuringiensis* preparations combined with each phagostimulant was significantly more important than those observed with preparations of *B. thuringiensis* alone. Mean feeding rates of insects exposed 48 h to sucrose/Foray 48B ^{tm} and proline/Foray 48B ^{tm} preparations increased by 53% and 21% respectively, compared to those observed with Foray 48B ^{tm} alone. The mean feeding rate of larvae exposed 48 h to sucrose/Dipel 176 ^{tm} preparation was 27% superior to that observed with Dipel 176 ^{tm} alone.

**TABLE 1**

| **Mean Cumulative Consumption (mm²) of the Fourth-Instar Larvae of the Spruce Budworm Exposed to Disks Wetted With Different Solutions (n = 40)** | | | | | | |
|---|---|---|---|---|---|---|
| Treatment | Time (hours) | | | | Enhanced Consumption**¹**(%) | Correl ation**²** |
| | 8 | 16 | 24 | 48 | | |
| Foray 48B ^{**tm**} | 4.23 | 6.53 | 9.06 | 12.13 | - | 0.837 |
| Foray 48B ^{**tm**} + sucrose | 4.85 | 10.20 | 13.18 | 18.58 | 53 | 0.835 |
| Foray 48B ^{**tm**} + proline | 5.25 | 9.05 | 11.70 | 14.71 | 21 | 0.801 |
| Dipel 176 ^{**tm**} | 6.66 | 11.00 | 16.94 | 23.09 | - | 0.823 |
| Dipel 176 ^{**tm**} + sucrose | 5.12 | 14.20 | 22.14 | 29.38 | 27 | 0.844 |

| | | | | | | |
|---|---|---|---|---|---|---|
| **¹** Increased consumption of disks treated with phagostimulant/*B. thuringiensis* preparations compared to those treated with *B. thuringiensis* preparations alone | | | | | | |
| **²** Correlation between the consumption rate and the time of exposure | | | | | | |

These results show that the addition of sucrose or proline to *B. thuringiensis* preparation provokes an increase of the ingestion rate of the insecticide by the insect. A strong correlation was observed between the mean consumption and the time of exposure to the various insecticidal preparations.

### EXAMPLE 2

The insecticidal potency and lethal concentration for 50% of the insect population (LC₅₀) exposed to a *B. thuringiensis* preparation and to phagostimulant/*B. thuringiensis* preparations were determined on larvae of the eastern spruce budworm, *Choristoneura fumiferana* (Clemens) and cabbage looper, *Trichoplusia ni* (Hübner). This experiment was conducted to measure the increase of larval mortality following the addition of sucrose or proline to an insecticide *B. thuringiensis* preparation. Eight-days-old larvae of spruce budworm and four-days-old larvae of cabbage looper were used in this experiment.

### Sample Unit and Procedure

Tests were conducted to determine the effect of the addition of sucrose or proline to a commercial *B. thuringiensis* preparation (Foray 48B ^{tm}) on larval mortality. Bioassays were conducted using official procedures described by Dulmage et al. (1971). The insecticidal potency (I.U./mg) and the lethal concentration (LC₅₀) of the following three preparations were measured:
1. Foray 48B ^{tm}
2. Foray 48B ^{tm} + sucrose
3. Foray 48B ^{tm} + proline
Each 100 ml of preparation contains 1,05 ml of commercial insecticide Foray 48B ^{tm}. In assayed-preparations 2 and 3, sucrose and proline were respectively present in a concentration of 2.5 m*M*.

From each preparation, seven dilutions were realized and mixed to an artificial diet for each insect species. Fifty larvae were randomly assigned to each dilution. Then spruce budworm and cabbage looper larvae were placed at 25°C and 29°C respectively, photoperiod of 16:8 h (L:D) and 60% R.H. and allowed to feed for 7 and 4 days respectively. After this period, mortality of larvae was determined for each dilution of each preparation. The concentration response mortality was calculated for each preparation and the insecticidal potency was determined using the following formula: 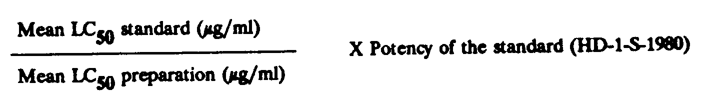
where the insecticidal potency of the standard is 16 000 I.U./mg.

### Results

The mortality of the larvae of both spruce budworm and cabbage looper exposed to sucrose/*B. thuringiensis* preparation was significantly higher than that of the insect exposed to the *B. thuringiensis* preparation alone. The mortality of spruce budworm larvae exposed to the proline/*B. thuringiensis* preparation in function of the concentration was also more important than that of larvae exposed to the *B. thuringiensis* preparation alone.

The results indicate that the quantity of insecticide required to cause 50% mortality in the population of the spruce budworm and cabbage looper is reduced by 83 and 145% respectively if 2,5 m*M* of sucrose is added to the insecticide *B. thuringiensis* preparation (Table 2). The LC₅₀ calculated for spruce budworm indicated that when larvae are exposed to a *B. thuringiensis* preparation in which 2,5 m*M* proline was added, about 35% less insecticide is required.

Table 2 also provides the insecticidal potency of the above insecticidal preparations. This potency is expressed in International Unit per milligramme (I.U./mg) and allows the comparison between different preparations. With both insect species, the addition of sucrose in a concentration of 2,5 m*M* strongly enhanced the insecticidal potency of *B. thuringiensis*. Proline also increases the potential of the biological insecticide against spruce budworm.

**TABLE 2**

| **Mean Lethal Concentration and Insecticidal Potency of *B. thuringiensis* Preparation and *B. thuringiensis*/Phagostimulant Preparations to Eastern Spruce Budworm and Cabbage Looper Larvae (n = 1050)** | | | |
|---|---|---|---|
| Treatment | Mean LC₅₀**¹** | Mean Insecticidal Potency**²** | Enhanced Potency**³** (%) |
| ***Choristoneura fumiferana*** | | | |
| Foray 48B ^{**tm**} | 43.92 | 3357.02 | - |
| Foray 48B ^{**tm**} + sucrose | 24.01 | 6141.63 | 83 |
| Foray 48B ^{**tm**} + proline | 32.56 | 4527.94 | 35 |

| ***Trichoplusia ni*** | | | |
|---|---|---|---|
| Foray 48B ^{**tm**} | 137.15 | 867.05 | - |
| Foray 48B ^{**tm**} + sucrose | 56.10 | 2119.63 | 145 |

| | | | |
|---|---|---|---|
| **¹** Mean concentration (µg/ml) which causes 50% of mortality in the population | | | |
| **²** International Unit per milligram (I.U./mg) | | | |
| **³** Increased insecticidal potency of phagostimulant/*B. thuringiensis* preparations related to insecticidal potency of the insecticide preparation alone | | | |

### EXAMPLE 3

The effect of the addition of phagostimulants to two commercial preparations of *B. thuringiensis* was studied on a natural population of the eastern spruce budworm larvae. The experiment was carried out on balsam fir, *Abies balsamea* (L.) Mill., stands severely infested by eastern spruce budworm.

### Sample Unit and Procedure

The commercial *B. thuringiensis* preparations employed were those mentioned in Example 1. Experimental applications of *B. thuringiensis* preparations alone, and with sucrose or proline were effected using common ground spraying equipment. The six following treatments were carried out using 20 trees per treatment:
1. Tap water control
2. Foray 48B ^{tm}
3. Foray 48B ^{tm} + sucrose
4. Foray 48B ^{tm} + proline
5. Dipel 176 ^{tm}
6. Dipel 176 ^{tm} + sucrose
Both formulations of *B. thuringiensis* were used at rates recommended by the manufacturer on the label (FORAY 48B ^{tm}, 2.37 litre per hectare; DIPEL 176 ^{tm}, 1.77 litre per hectare), and the concentration of sucrose and proline was set at 2.5 m*M*. The preparations were freshly made just before being sprayed.

Spruce budworm larval population density was established for each tree 24 hours prior to treatment. Mortality rates of larvae for each treatment were assessed by counting living and dead insects 7 days later.

### Results

The enhanced effect of the preparations of *B. thuringiensis* associated with a phagostimulant is clearly evident. Referring to Table 3, it will become apparent that sucrose/*B. thuringiensis* preparations and the proline/*B****.*** *thuringiensis* preparation give much higher mortality rates than those observed with the *B. thuringiensis* preparation alone. The association of sucrose with *B. thuringiensis* (Foray 48B^{tm}) preparation provides exceptional control of spruce budworm larvae with a mortality rate approximately 44% higher than that observed with the *B. thuringiensis* preparation alone. The sucrose/ *B. thuringiensis* (Dipel 176 ^{tm}) and proline/*B. thuringiensis* (Foray 48B^{tm}) preparation also provide excellent control of insect population with a mortality rate 27% higher than that observed with each *B. thuringiensis* preparation alone.

**Table 3**

| **Observed Mean Percentage Mortality (Assessed 7 Days Post-Treatment) of Eastern Spruce Budworm larvae for each preparation** | | |
|---|---|---|
| Treatment | Mean Mortality (%) | Enhanced Mortality**¹** (%) |
| Tap water control | 2 | - |
| Foray 48B ^{**tm**} | 52 | - |
| Foray 48B ^{**tm**} + sucrose | 75 | 44 |
| Foray 48B ^{**tm**} + proline | 66 | 27 |
| Dipel 176 ^{**tm**} | 33 | - |
| Dipel 176 ^{**tm**} + sucrose | 45 | 27 |

| | | |
|---|---|---|
| **¹** Increased mortality of insects exposed to phagostimulant/*B. thuringiensis* preparations in relation to insecticide preparations alone. | | |

These results illustrate that the addition of sucrose or proline to *B. thuringiensis* preparation provokes an increase in the mortality rate of spruce budworm larvae. As it can be seen in Table 3, the advantageous increase mortality of insects exposed to the phagostimulant insecticidal preparation of the present invention is verified on the field as well as in controlled laboratory conditions.

The unexpected results obtained with the phagostimulant insecticidal preparations of this invention represent a significant contribution for the control and reduction of the population of pests insects.

While the invention has been described in connection with specific embodiments thereof, it will be understood that it is capable of further modifications and this application is intended to cover any variations, uses or adaptations of the invention following, in general, the principles of the invention and including such departures from the present disclosure as come within known or customary practices within the art to which the invention pertains, and as may be applied to the essential features hereinbefore set forth, and as follows in the scope of the appended claims.

## Claims

1. An insecticidal preparation for controlling or reducing the population of pest insects, comprising a phagostimulant in association with an insecticide.

2. A preparation according to claim 1, wherein the phagostimulant is selected from the group consisting of a carbohydrate, an amino acid, or mixtures thereof.

3. A preparation according to claim 2, wherein the carbohydrate comprises at least one sugar.

4. A preparation according to claim 1, wherein the concentration of phagostimulant is as low as about 1 m*M*.

5. A preparation according to claim 1, wherein the insecticide is a biological insecticide.

6. A preparation according to claim 5, wherein the biological insecticide is selected from the group consisting of bacteria, viruses, fungi, microsporidia and mixtures thereof.

7. A preparation according to claim 1, wherein the insecticide is a chemical compound obtained synthetically or biochemically.

8. A preparation according to claim 5, wherein the biological insecticide is *Bacillus thuringiensis*.

9. A preparation according to claim 1, further comprising an insecticidally acceptable carrier.

10. An insecticidal preparation for controlling or reducing the population of pest insects, comprising an insecticidally effective amount of *Bacillus thuringiensis* in association with at least 1 m*M* of a phagostimulant.

11. An insecticidal preparation according to claim 10, wherein the insect is *Choristoneura fumiferana* (Clemens) or *Trichoplusia ni* (Hübner); and the phagostimulant is sucrose, proline, and mixtures thereof.

12. A method for controlling or reducing the population of pest insects, which comprises applying an insecticidally effective amount of a preparation comprising a phagostimulant in association with an insecticide.

13. A method according to claim 12, wherein the phagostimulant is selected from the group consisting of a carbohydrate, an amino acid, or mixtures thereof.

14. A method according to claim 13, wherein the carbohydrate comprises at least one sugar.

15. A method according to claim 12, wherein the concentration of phagostimulant is as low as about 1 m*M*.

16. A method according to claim 12, wherein the insecticide is a biological insecticide.

17. A method according to claim 16, wherein the biological insecticide is selected from the group consisting of bacteria, viruses, fungi, microsporidia and mixtures thereof.

18. A method according to claim 12, wherein the insecticide is a chemical compound obtained synthetically or biochemically.

19. A method according to claim 16, wherein the biological insecticide is *Bacillus thuringiensis*.

20. A method for controlling or reducing the population of pest insects, which comprises applying an insecticidally effective amount of a preparation comprising *Bacillus thuringiensis* in association with at least 1 m*M* of a phagostimulant.

21. A method according to claim 20, wherein the insect is *Choristoneura fumiferana* Clemens or *Trichoplusia ni* (Hübner); and the phagostimulant is sucrose, proline, and mixtures thereof.
